# EUROPÄISCHE PATENTSCHRIFT

(11) **EP 3 585 626 B1**
(45) Veröffentlichungstag und Bekanntmachung des Hinweises auf die Patenterteilung: **17.03.2021**
(21) Anmeldenummer: 18701680.3
(22) Anmeldetag: 15.01.2018
(51) Int. Cl.: B60C 11/03, B60C 11/13, B60C 11/11

(54) **FAHRZEUGLUFTREIFEN**
TIRE
PNEUMATIQUE

(30) Priorität: 23.02.2017 DE 102017202939
(43) Veröffentlichungstag der Anmeldung: 01.01.2020
(73) Patentinhaber: Continental Reifen Deutschland GmbH, 30165 Hannover (DE)
(72) Erfinder: LUTZ, André, 30167 Hannover (DE); KRISTEN, Florian, 30171 Hannover (DE)
(74) Vertreter: Continental Corporation
(86) Internationale Anmeldenummer: PCT/EP2018/050805
(87) Internationale Veröffentlichungsnummer: WO 2018/153571

(56) Entgegenhaltungen:
- JP-A- 2009 292 343
- JP-A- 2012 020 702
- US-A1- 2007 062 626

## Beschreibung

Die Erfindung betrifft einen Fahrzeugluftreifen mit einem Laufstreifen mit Profilblockreihen mit durch Rillen begrenzten Profilblöcken, welche Rillen in Draufsicht T-Kreuzungen bilden und durch einen Rillengrund und Blockflanken begrenzt sind, wobei in Rillen Vorsprünge ausgebildet sind, welche in radialer Richtung an ihrer höchsten Stelle gegenüber dem tiefsten Punkt der Rillen eine Höhe von 10% bis 80% der Profiltiefe aufweisen, in Kreuzungsbereichen von T-Kreuzungen der Rillen positioniert sind und an die der Einmündung der einmündenden Rille gegenüberliegende Blockflanke angebunden sind.

Ein derartiger gattungsbildender Fahrzeugluftreifen ist beispielsweise aus der JP 2012 020 702 A bekannt. Dieser Reifen weist gemäß einem Ausführungsbeispiel einen Laufstreifen mit drei mittleren Profilblockreihen auf, welche durch gerade verlaufende Umfangsrillen voneinander getrennt und jeweils durch Querrillen in Profilblöcke gegliedert sind. Die Profilblöcke sind derart in Umfangsrichtung zueinander versetzt ausgebildet, dass sich in Draufsicht T-Kreuzungen zwischen den Umfangsrillen und den Querrillen bilden. An den Kreuzungsbereichen befinden sich an die Blockflanken angebundene, nasenförmige Vorsprünge mit gleichschenkelig-dreieckigen Grundflächen, wobei der Nasenrücken der Vorsprünge ausgehend von der Blockflanke in Richtung zur jeweiligen Querrille abfällt. Die Vorsprünge sollen einen Schutz vor Steinen bieten.

Die JP 2009 292 343 A offenbart einen Fahrzeugluftreifen mit einem Laufstreifen mit einem Stollenprofil, welches zwei nebeneinander ausgebildete Reihen von Profilstollen umfasst. Die Reihen sind durch eine im Bereich des Reifenzenits verlaufende, in Draufsicht zickzackförmige Umfangsrille getrennt. Innerhalb einer Reihe befindliche Profilstollen sind durch in die Umfangsrille einmündende Querrillen getrennt, wobei die Querrillen der einen Reihe zu jenen der anderen Reihe in Umfangsrichtung versetzt sind. An den laufstreifeninnenseitigen Enden der Querrillen sind daher in Draufsicht dreisternförmige Rillenkreuzungen gebildet. In den Kreuzungsbereichen der Rillenkreuzungen sind in Draufsicht sichelförmige Vorsprünge vorgesehen, welche eine von ihrer Deckfläche ausgehende Nut aufweisen und als Steinauswerfer wirken sollen.

Aus der US 6 000 451 A ist ein Fahrzeugluftreifen bekannt, dessen Laufstreifen ein Blockprofil mit drei im zentralen Laufstreifenbereich verlaufenden Profilblockreihen aufweist. Am Rillengrund der Rillen sind unterschiedlich dimensionierte, als Steinauswerfer dienende Vorsprünge ausgebildet.

Aus der US 5 975 172 A ist ein Fahrzeugluftreifen mit zwei im mittleren Bereich des Laufstreifens in Umfangsrichtung umlaufenden Profilblockreihen bekannt. Die beiden Profilblockreihen sind durch eine Umfangsrille voneinander getrennt, wobei auf dem Rillengrund der Umfangsrille eine Vielzahl von in Umfangsrichtung aufeinanderfolgenden und im Querschnitt rechteckigen Vorsprüngen als Steinauswerfer ausgebildet ist.

Steinauswerfer verhindern ein Verfangen von Steinen in Rillen von Laufstreifen bzw. begünstigen das Auswerfen von eingefangenen Steinen und schützen derart die Rillengründe vor Schäden. Die bekannten, als Steinauswerfer dienenden Vorsprünge sind freistehend auf den Rillengründen der Rillen positioniert und werden bei der Vulkanisation des Reifens in einer Vulkanisationsform mit dem Laufstreifenprofil mitgebildet. Die bekannten freistehenden Vorsprünge erfordern eine ausreichend große Rillenbreite, insbesondere müssen die Rillen einen breiten Rillengrund aufweisen. In Reifen mit Laufstreifen, die wegen eines geringen Rollwiderstandes und einer besseren Abriebleistung relativ schmale Umfangsrillen aufweisen, lassen sich die bekannten Steinauswerfer nicht mehr positionieren.

Der Erfindung liegt daher die Aufgabe zugrunde, bei einem Fahrzeugluftreifen der eingangs genannten Art als Steinauswerfer dienende Vorsprünge derart zu gestalten, dass diese auch in schmalen Rillen mit insbesondere nur 3,0 mm bis 6,0 mm breiten Rillengründen ausgebildet werden können und dass diese über die Lebensdauer des Reifens die erwünschte Wirkung besitzen.

Die gestellte Aufgabe wird erfindungsgemäß dadurch gelöst, dass die Vorsprünge in radialer Richtung jeweils durch eine in Draufsicht trapezförmig Deckfläche begrenzt sind, wobei die Basis des Trapezes an der Blockflanke liegt, oder im Wesentlichen quaderförmig sind.

Die Positionierung der Vorsprünge jeweils in einem Kreuzungsbereich der T-Kreuzung von Rillen sowie die Anbindung an die der einmündenden Rille gegenüberliegenden Blockflanke ermöglicht eine stabile und effektive Ausführung der als Steinauswerfer dienenden Vorsprünge, auch in sehr schmalen Rillen bzw. auf schmalen Rillengründen. Die Erfindung verringert vor allem auch das Risiko des Verfangens von Steinen in sogenannten Taschen - den Kreuzungsbereichen von Rillen, insbesondere von Umfangsrillen mit Querrillen. Der Laufstreifen des Reifens kann somit mit schmalen Umfangsrillen versehen werden, um den Rollwiderstand möglichst gering zu halten und um eine hohe Lebensdauer zu erreichen.

Gemäß einer bevorzugten Ausführungsvariante weisen die Vorsprünge an der Blockflanke, an welche sie angebunden sind, eine Breite auf, welche 90% bis 120% der Breite der einmündenden Rille an der Einmündung an der Laufstreifenperipherie beträgt. Durch solche Vorsprünge ist das Risiko des Verfangens von Steinen am Laufstreifen besonders gering. Sollte sich dennoch ein Stein an einer T-Kreuzung verfangen, begünstigen solche Vorsprünge das Auswerfen der Steine beim Austritt der T-Kreuzung aus der Bodenaufstandsfläche auf besondere effektive Weise.

Die steinauswerfende Wirkung der Vorsprünge wird zusätzlich verbessert, wenn die Vorsprünge gegenüber dem Niveau der Blockflanke an ihrer dicksten Stelle eine Dicke von 40% bis 100%, insbesondere von mindestens 50%, der an der Laufstreifenperipherie ermittelten Breite der Rille, in welcher die Vorsprünge ausgebildet sind, aufweisen. Gemäß einer bevorzugten Ausführungsvariante weist die Rille, in welcher die Vorsprünge ausgebildet sind, am Rillengrund eine Breite von 3,0 mm bis 6,0 mm, insbesondere von höchstens 4,0 mm, auf und ist vorzugsweise eine Umfangsrille. Durch solche schmalen Rillen wird das Leervolumen des Laufstreifens verringert, wodurch der Rollwiderstand verringert und die Abriebleistung verbessert werden.

Für die steinauswerfende Wirkung der Vorsprünge ist es ferner auch von Vorteil, wenn die Höhe der Vorsprünge an ihrer höchsten Stelle mindestens 5,0 mm beträgt. Bevorzugter Weise beträgt die Höhe der Vorsprünge 20% bis 60%, insbesondere mindestens 50%, der Profiltiefe.

Gemäß einer weiteren bevorzugten Ausführungsvariante nimmt die Breite der Vorsprünge in Richtung der einmündenden Rillen der T-Kreuzungen, insbesondere auf die Breite der einmündenden Rillen am Rillengrund, ab.

Für die Stabilität der Vorsprünge ist es vorteilhaft, wenn die Deckfläche der Vorsprünge zur radialen Richtung unter einem Winkel von 45° bis 90°, insbesondere von höchstens 60°, geneigt ist. Durch derart geneigte Deckflächen wird auch der Steinauswurfeffekt positiv beeinflusst.

Dabei ist es für die Stabilität der Vorsprünge auch von Vorteil, wenn die Deckfläche der Vorsprünge derart geneigt ist, dass die Höhe der Vorsprünge an der Blockflanke am größten ist. Die Höhe der Vorsprünge nimmt daher zu der an der T-Kreuzung einmündenden Rille ab.

Bei einer weiteren für die Stabilität der Vorsprünge günstigen Ausführung der Vorsprünge sind diese in Richtung der einmündenden Rillen der T-Kreuzungen jeweils durch eine Flankenfläche begrenzt, welche zur radialen Richtung unter einem Winkel von 15° bis 30° geneigt ist.

Bei einer weiteren vorteilhaften Ausführungsvariante sind am Rillengrund von einmündenden Rillen an die Blockflanken angebundene Grundanhebungen ausbildet, welche an die Vorsprünge anschließen, in radialer Richtung eine Höhe von 5% bis 10% der Tiefe der einmündenden Rillen aufweisen und sich über 10% bis 100% der Erstreckungslänge der einmündenden Rillen erstrecken. Mittels derartiger Grundanhebungen wird zusätzlich auch der Rillengrund der einmündenden Rille im Bereich der T-Kreuzung vor Beschädigungen durch an der T-Kreuzung eingefangene Steine geschützt. Zusätzlich haben solche Grundanhebungen eine stabilisierende Wirkung auf die Vorsprünge in den Kreuzungsbereichen der T-Kreuzungen.

Gemäß einer weiteren Ausführungsvariante der Erfindung sind am Rillengrund von einmündenden Rillen an die Blockflanken angebundene Grundanhebungen ausbildet, welche nicht unmittelbar an die Vorsprünge anschließen und die Tiefe der einmündenden Rillen über zumindest 50% ihrer Erstreckungslänge auf 60% bis 80% verringern.

Vorzugsweise verlaufen die die T-Kreuzungen bildenden Rillen bezogen auf ihre in Draufsicht in Erstreckungsrichtung ausgerichteten Mittellinien zueinander unter einem Winkel von 90° oder unter einem von 90° um bis zu 30°, insbesondere um bis zu 20°, abweichenden Winkel.

Weitere Merkmale, Vorteile und Einzelheiten der Erfindung werden nun anhand der Zeichnung, die schematisch mehrere Ausführungsbeispiele der Erfindung darstellt, näher beschrieben. Dabei zeigen
Fig. 1 eine vereinfachte Draufsicht auf einen Ausschnitt eines Laufstreifens eines Fahrzeugluftreifens mit einer Ausführungsvariante der Erfindung,
Fig. 2 eine vereinfachte Schrägansicht des in Fig. 1 gezeigten Laufstreifens im Bereich einer Rillenkreuzung,
Fig. 3 eine zu Fig. 2 analoge Ansicht mit einer zweiten Ausführungsvariante der Erfindung,
Fig. 4 eine zu Fig. 2 analoge Ansicht mit einer dritten Ausführungsvariante der Erfindung,
Fig. 5 eine zu Fig. 2 analoge Ansicht mit einer vierten Ausführungsvariante der Erfindung und
Fig. 6 eine zu Fig. 2 analoge Ansicht mit einer fünften Ausführungsvariante der Erfindung.

Die Erfindung befasst sich mit einer besonderen Ausgestaltung eines Laufstreifens eines Fahrzeugluftreifens in Radialbauart, insbesondere eines Nutzfahrzeugreifens, eines Off-Road-Reifens oder eines Reifens für Light-Trucks. Erfindungsgemäß ausgeführte Fahrzeugluftreifen sind vor allem für den Einsatz auf steinigem Untergrund, beispielsweise auf Schotterstraßen, Baustellen oder im Gelände, vorgesehen und geeignet.

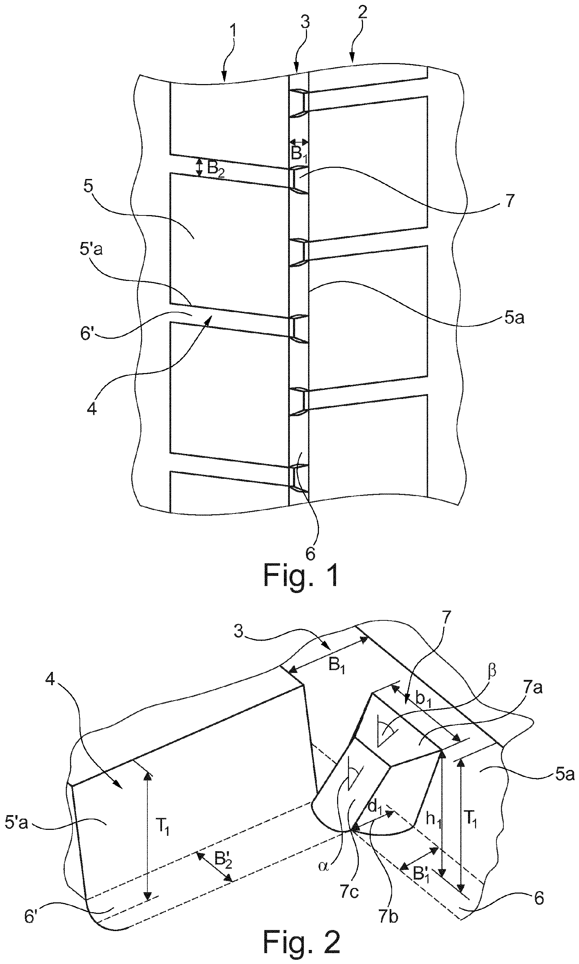

Fig. 1 zeigt Umfangsabschnitte von zwei im mittleren Laufstreifenbereich nebeneinander verlaufenden Profilblockreihen 1, 2, welche durch eine in Draufsicht gerade verlaufende Umfangsrille 3 voneinander getrennt sind und jeweils eine Vielzahl von in Umfangsrichtung aufeinanderfolgenden, durch Querrillen 4 voneinander getrennten Profilblöcken 5 aufweisen. Die Profilblöcke 5 der Profilblockreihe 1 sind zu den Profilböcken 5 der Profilblockreihe 2 in Umfangsrichtung versetzt angeordnet, sodass die Querrillen 4 aus den beiden Profilblockreihen 1, 2 in Umfangsrichtung gegeneinander versetzt in die Umfangsrille 3 einmünden. Jede Querrille 4 bildet daher gemeinsam mit der Umfangsrille 3 in Draufsicht eine "T-Kreuzung".

Bei der gezeigten Ausführungsvariante verlaufen die Querrillen 4 innerhalb jeder Profilblockreihe 1, 2 in Draufsicht parallel zueinander, gerade und unter einem von der Querrichtung um bis 45° abweichenden Winkel, können jedoch auch in Querrichtung verlaufen. Die Umfangsrille 3 und die Querrillen 4 weisen in radialer Richtung an ihrer tiefsten Stelle jeweils eine Tiefe T₁ (Fig. 2) auf, welche der vorgesehenen maximalen Profiltiefe entspricht, die bei Nutzfahrzeugreifen üblicherweise 12,0 mm bis 20,0 mm beträgt. Ferner weist die Umfangsrille 3 an der Laufstreifenperipherie eine Breite B₁ und jede Querrille 4 an der Laufstreifenperipherie eine Breite B₂ auf, wobei die Breiten B₁, B₂ jeweils 4,0 mm bis 12,0 mm betragen.

Die Profilblöcke 5 sind zu den sie begrenzenden Rillen, in Fig. 1 sind dies die Umfangsrille 3 und die Querrillen 4, durch Blockflanken 5a, 5'a begrenzt, welche ihrerseits gemeinsam mit Rillengründen 6, 6' die Umfangsrille 3 und die Querrillen 4 begrenzen. Die Blockflanken 5a, 5'a verlaufen entweder in radialer Richtung oder sind in bekannter Weise zur radialen Richtung unter einem Winkel von insbesondere bis zu 15° geneigt, wobei die Rillen 3, 4 an den radial innersten Punkten der Blockflanken 5a, 5'a ihre kleinste Breite B₁', B₂' (Fig. 2) von 3,0 mm bis 6,0 mm, insbesondere von höchstens 4,0 mm, aufweisen. Die Breiten B₁', B₂' entsprechen daher den Breiten der gerundeten Rillengründe 6, 6' der Rillen 3, 4.

Wie Fig. 1 gemeinsam mit Fig. 2 zeigt, sind in der Umfangsrille 3 in den Kreuzungsbereichen der T-Kreuzungen der Rillen 3, 4 klotzartige Vorsprünge 7 ausgebildet, welche auf dem Rillengrund 6 der Umfangsrille 3 sitzen und an die der Einmündung der jeweiligen Querrille 4 gegenüberliegende Blockflanke 5a angebunden sind. Die Vorsprünge 7 wirken als sogenannte Steinauswerfer, welche ein dauerhaftes Verfangen von Steinen an den kritischen Krcuzungsbcrcichcn der T-Krcuzungcn der Rillen 3, 4 verhindern.

Gemäß Fig. 2 ist jeder Vorsprung 7 in radialer Richtung durch eine Deckfläche 7a, in Umfangsrichtung durch zwei Seitenflächen 7b sowie gegenüber bzw. zur jeweiligen Querrille 4 durch eine Flankenfläche 7c begrenzt, welche an die beiden Seitenflächen 7b und die Deckfläche 7a anschließt.

Die Deckfläche 7a weist die Form eines gleichschenkeligen Trapezes auf, wobei die Basis des Trapezes (längere Grundseite) an der Blockflanke 5a liegt. Jeder Vorsprung 7 weist daher an der Blockflanke 5a seine größte in Umfangsrichtung ermittelte Breite bi auf, welche 90% bis 120%, beim Ausführungsbeispiel gemäß Fig. 2 mehr als 100%, der an der Einmündung der Querrillen 4 an der Laufstreifenperipherie ermittelten Breite beträgt. Zur jeweiligen Querrille 4 nimmt die Breite des Vorsprunges 7 entsprechend der trapezförmigen Deckfläche 7a kontinuierlich ab, wobei sich die Breite vorzugsweise auf die Größe der Breite B₂' des Rillengrundes 6' der Querrille 4 verringert. Die beiden Seitenflächen 7b sind zur Erstreckungsrichtung der Umfangsrille 3 daher entsprechend schräggestellt. Die Deckfläche 7a verläuft zur radialen Richtung unter einem Winkel β von 45° bis 90°, insbesondere von höchstens 60°, und ist bei einem von 90° abweichenden Winkel β derart geneigt, dass der Vorsprung 7 an der Blockflanke 5a in radialer Richtung gegenüber dem tiefsten Punkt der Umfangsrille 3 seine größte Höhe hi aufweist. Die Höhe hi der Vorsprünge 7 beträgt jeweils 10% bis 80%, insbesondere 20% bis 60%, und bevorzugt mindestens 50% der Tiefe T₁. Besonders bevorzugter Weise beträgt die Höhe hi jedes Vorsprunges 7 mindestens 5,0 mm. Die Flankenfläche 7c ist im Wesentlichen rechteckig, verläuft zur radialen Richtung unter einem Winkel α von 15° bis 30° und endet am Rillengrund 6' der jeweiligen Querrille 4. Ferner weist der Vorsprung 7 gegenüber dem Niveau der Blockflanke 5a, im rechten Winkel zu dieser, an welcher er angebunden ist, an seiner dicksten Stelle eine Dicke di von 40% bis 100%, insbesondere von mindestens 50%, der Breite B₁' der Umfangsrille 3 auf.

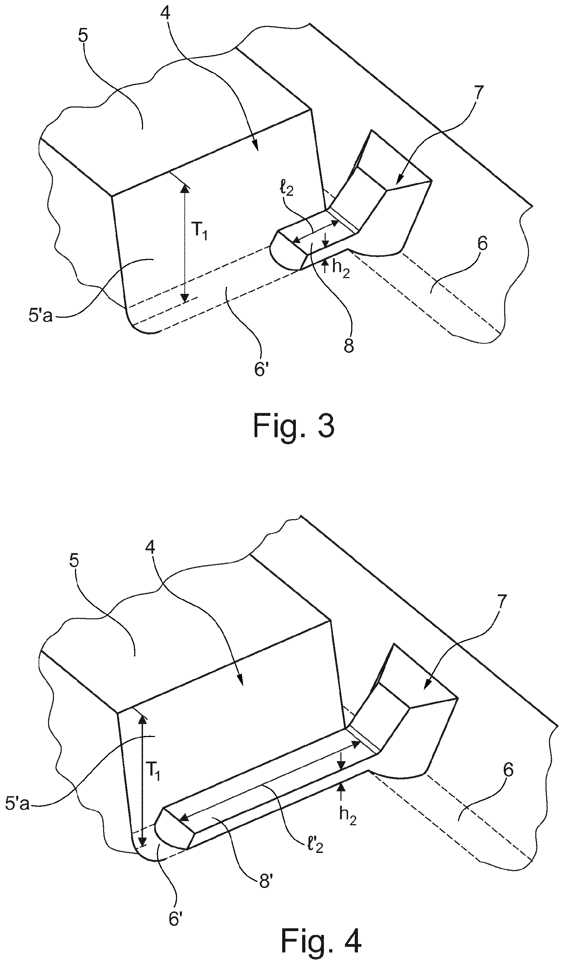

Bei den nachfolgend anhand der Figuren 3 bis 5 beschriebenen Ausführungsvarianten sind gemäß den Erläuterungen zu Fig. 1 und Fig. 2 überstimmend ausgeführte Bestandteile des Laufstreifens mit den gleichen Bezugsziffern versehen. Ebenso weisen in den Figuren 3 bis 5 übereinstimmend ausgeführte Bestandteile die gleichen Bezugsziffern auf.

Die in Fig. 3 und Fig. 4 gezeigten Ausführungsvarianten unterscheiden sich von der Ausführungsvariante gemäß Fig. 2 dadurch, dass am Rillengrund 6' der Querrillen 4 jeweils eine flache langgestreckte Grundanhebung 8, 8' ausgebildet ist, welche an den jeweiligen Vorsprung 7 anschließt und an die Blockflanken 5'a der Profilblöcke 5 angebunden ist. Die Grundanhebung 8, 8' weist gegenüber dem tiefsten Punkt der Querrille 4 in radialer Richtung eine Höhe h₂ von 5% bis 10% der Tiefe T₁ auf, wobei die Höhe h₂ mindestens 1,0 mm, insbesondere mindestens 2,0 mm, beträgt. Die gemäß Fig. 3 vorgesehene Grundanhebung 8 weist ferner eine Erstreckungslänge l₂ von 5,0 mm bis 15,0 mm, die gemäß Fig. 4 vorgesehene Grundanhebung 8' weist eine Erstreckungslänge l₂' von 30% bis 100%, insbesondere, wie in Fig. 4 gezeigt, von mindestens 50%, der Erstreckungslänge der jeweiligen Querrille 4 auf, wobei die Erstreckungslänge l₂, l₂' sowie die Erstreckungslänge der Querrille 4 entlang einer in Rillenlaufrichtung der jeweiligen Querrille 4 ausgerichteten Mittellinie ermittelt wird.

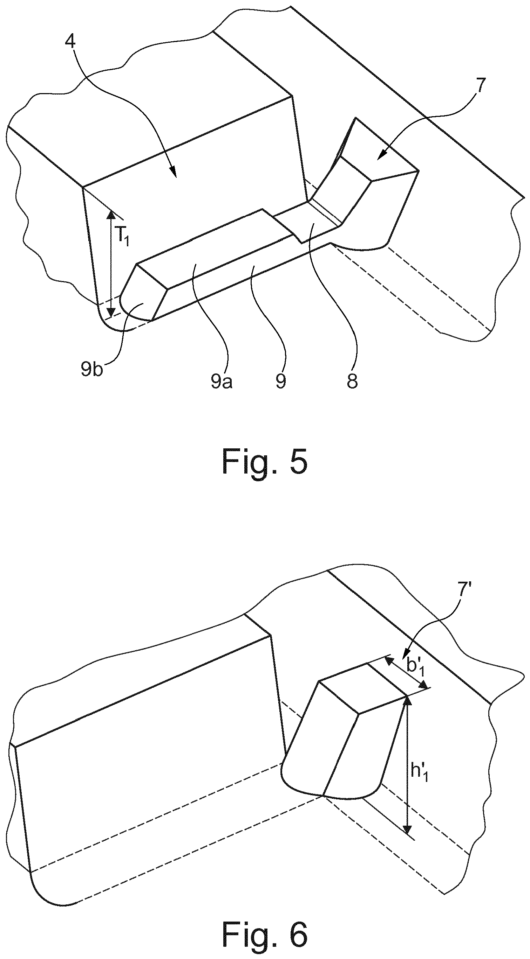

Fig. 5 zeigt eine Ausführungsvariante, bei welcher ein Vorsprung 7, eine gemäß Fig. 3 ausgeführte Grundanhebung 8 und eine an diese anschließende in der Querrille 4 verlaufende weitere Grundanhebung 9 vorgesehen ist. Die Grundanhebung 9 ist in radialer Richtung durch eine parallel zur Laufstreifenperipherie verlaufende Deckfläche 9a sowie ferner durch zwei zur radialen Richtung geneigte Flankenflächen 9b begrenzt. Die Grundanhebung 9 verringert die Tiefe der jeweiligen Querrille 4 über zumindest 50% ihrer Erstreckungslänge auf 60% bis 80% der Tiefe T₁. Die Grundanhebung 9 verläuft höchstens bis zum zweiten Ende der Querrille 4.

Fig. 6 zeigt eine Ausführungsvariante mit einem innerhalb der Umfangsrille 3 positionierten im Wesentlichen quaderförmigen Vorsprung 7', welcher analog zum Vorsprung 7 (Fig. 1 bis Fig. 5) positioniert ist. Der Vorsprung 7' weist eine in Umfangsrichtung ermittelte Breite b₁' auf, welche analog zur Breite bi des Vorsprunges 7 90% bis 120%, beim gezeigten Ausführungsbeispiel 100%, der an der Einmündung und der Laufstreifenperipherie ermittelten Breite der Querrille 4 beträgt. Ferner weist der Vorsprung 7' in radialer Richtung eine Höhe h₁' auf, die 10% bis 80%, insbesondere 20% bis 60%, und besonders bevorzugt mindestens 50%, der Tiefe T₁ der Umfangsrille 3 beträgt.

Es wird ferner darauf verwiesen, dass unter T-Kreuzungen solche zu verstehen sind, bei welchen Rillen, bezogen auf ihre in Draufsicht in Erstreckungsrichtung ausgerichteten Mittellinien, zueinander unter einem Winkel von 90° oder unter einem von 90° um bis zu 30°, insbesondere um bis zu 20°, abweichenden Winkel verlaufen. Die Vorsprünge 7, 7' sind vorzugsweise ausschließlich in den Kreuzungsbereichen der T-Kreuzungen der Rillen vorgesehen.

Die Vorsprünge können mit abgerundeten Kanten und Ecken ausgeführt sein.

### Bezugszeichenliste

- 1, 2 ..................................: Profilblockreihe
- 3 ......................................: Umfangsrille
- 4 ......................................: Querrille
- 5 ......................................: Profilblock
- 5a, 5'a..............................: Blockflanke
- 6, 6' .................................: Rillengrund
- 7, 7' .................................: Vorsprung
- 7a ....................................: Deckfläche
- 7b ...................................: Seitenfläche
- 7c ....................................: Flankenfläche
- 8, 8', 9 .............................: Grundanhebung
- 9a ....................................: Deckfläche
- 9b ....................................: Flankenfläche
- B₁, B₂, B₁', B₂', b₁, b₁'.....: Breite
- d₁ .....................................: Dicke
- h₁, h₁',h₂ ..........................: Höhe
- l₂, l₂' ................................: Länge
- T₁ ....................................: Tiefe
- α, β ..................................: Winkel

## Patentansprüche

1. Fahrzeugluftreifen mit einem Laufstreifen mit Profilblockreihen (1,2) mit durch Rillen (3, 4) begrenzten Profilblöcken (5), welche Rillen (3, 4) in Draufsicht T-Kreuzungen bilden und durch einen Rillengrund (6, 6') und Blockflanken (5a, 5'a) begrenzt sind, wobei in Rillen (3) Vorsprünge (7, 7') ausgebildet sind, welche in radialer Richtung an ihrer höchsten Stelle gegenüber dem tiefsten Punkt der Rillen (3) eine Höhe (h₁, h₁') von 10% bis 80% der Profiltiefe aufweisen, in Kreuzungsbereichen von T-Kreuzungen der Rillen (3, 4) positioniert sind und an die der Einmündung der einmündenden Rille (4) gegenüberliegende Blockflanke (5a) angebunden sind,
**dadurch gekennzeichnet, dass** die Vorsprünge (7, 7') entweder in radialer Richtung jeweils durch eine in Draufsicht trapezförmig Deckfläche (7a) begrenzt sind, wobei die Basis des Trapezes an der Blockflanke (5a) liegt, oder dass die Vorsprünge (7, 7') im Wesentlichen quaderförmig sind.

2. Fahrzeugluftreifen nach Anspruch 1, **dadurch gekennzeichnet, dass** die Vorsprünge (7, 7') an der Blockflanke (5a), an welche sie angebunden sind, eine Breite (b₁) aufweisen, welche 90% bis 120% der Breite der einmündenden Rille (4) an der Einmündung an der Laufstreifenperipherie beträgt.

3. Fahrzeugluftreifen nach Anspruch 1 oder 2, **dadurch gekennzeichnet, dass** die Vorsprünge (7, 7') gegenüber dem Niveau der Blockflanke (5a) an ihrer dicksten Stelle eine Dicke (d₁) von 40% bis 100%, insbesondere von mindestens 50%, der an der Laufstreifenperipherie ermittelten Breite (B₁') der Rille (3), in welcher die Vorsprünge (7, 7') ausgebildet sind, aufweisen.

4. Fahrzeugluftreifen nach einem der Ansprüche 1 bis 3, **dadurch gekennzeichnet, dass** die Rille (3), in welcher die Vorsprünge (7, 7') ausgebildet sind, am Rillengrund (6) eine Breite (B₁') von 3,0 mm bis 6,0 mm, insbesondere von höchstens 4,0 mm, aufweist und vorzugsweise eine Umfangsrille (3) ist.

5. Fahrzeugluftreifen nach Anspruch 1, **dadurch gekennzeichnet, dass** die Höhe (h₁) der Vorsprünge (7, 7') an ihrer höchsten Stelle mindestens 5,0 mm beträgt.

6. Fahrzeugluftreifen nach Anspruch 1 oder 5, **dadurch gekennzeichnet, dass** die Höhe (h₁) der Vorsprünge (7, 7') 20% bis 60%, insbesondere mindestens 50%, der Profiltiefe (T₁) beträgt.

7. Fahrzeugluftreifen nach einem der Ansprüche 1 bis 6, **dadurch gekennzeichnet, dass** die Breite der Vorsprünge (7, 7') in Richtung der einmündenden Rillen (4) der T-Kreuzungen, insbesondere auf die Breite (B₂') der einmündenden Rillen (4) am Rillengrund (6), abnimmt.

8. Fahrzeugluftreifen nach einem der Ansprüche 1 bis 7, **dadurch gekennzeichnet, dass** die Deckfläche (7a) der Vorsprünge (7, 7') zur radialen Richtung unter einem Winkel (β) von 45° bis 90°, insbesondere von höchstens 60°, geneigt ist.

9. Fahrzeugluftreifen nach Anspruch 8, **dadurch gekennzeichnet, dass** die Deckfläche (7a) der Vorsprünge (7, 7') derart geneigt ist, dass die Höhe (h₁) der Vorsprünge (7, 7') an der Blockflanke (5a) am größten ist.

10. Fahrzeugluftreifen nach einem der Ansprüche 1 bis 9, **dadurch gekennzeichnet, dass** die Vorsprünge (7, 7') in Richtung der einmündenden Rillen (4) der T-Kreuzungen jeweils durch eine Flankenfläche (7c) begrenzt sind, welche zur radialen Richtung unter einem Winkel (α) von 15° bis 30° geneigt ist.

11. Fahrzeugluftreifen nach einem der Ansprüche 1 bis 10, **dadurch gekennzeichnet, dass** am Rillengrund (6') von einmündenden Rillen (4) an die Blockflanken (5'a) angebundene Grundanhebungen (8, 8') ausbildet sind, welche an die Vorsprünge (7) anschließen, in radialer Richtung eine Höhe (h₂) von 5% bis 10% der Tiefe (T₁) der einmündenden Rillen (4) aufweisen und sich über 10% bis 100% der Erstreckungslänge der einmündenden Rillen (4) erstrecken.

12. Fahrzeugluftreifen nach einem der Ansprüche 1 bis 11, **dadurch gekennzeichnet, dass** am Rillengrund (6') von einmündenden Rillen (4) an die Blockflanken (5'a) angebundene Grundanhebungen (9) ausbildet sind, welche nicht unmittelbar an die Vorsprünge (7, 7') anschließen und die Tiefe der einmündenden Rille (4) über zumindest 50% ihrer Erstreckungslänge auf 60% bis 80% verringern.

13. Fahrzeugluftreifen nach einem der Ansprüche 1 bis 12, **dadurch gekennzeichnet, dass** die T-Kreuzungen bildenden Rillen (3, 4) bezogen auf ihre in Draufsicht in Erstreckungsrichtung ausgerichteten Mittellinien zueinander unter einem Winkel von 90° oder unter einem von 90° um bis zu 30°, insbesondere um bis zu 20°, abweichenden Winkel verlaufen.

## Claims

1. Pneumatic vehicle tyre having a tread with profile block rows (1, 2) with profile blocks (5) delimited by channels (3, 4), which channels (3, 4) form T-shaped intersections in plan view and are delimited by a channel base (6, 6') and by block flanks (5a, 5'a), wherein, in channels (3), there are formed projections (7, 7') which, in a radial direction, have at their highest point a height (h₁, h₁'), in relation to the lowest point of the channels (3), of 10% to 80% of the profile depth, are positioned in intersection regions of T-shaped intersections of the channels (3, 4) and are attached to that block flank (5a) which is situated opposite the opening-in point of the opening-in channel (4),
**characterized**
**in that** either the projections (7, 7') are delimited in a radial direction in each case by a top surface (7a) which is trapezoidal in plan view, wherein the base of the trapezoid lies at the block flank (5a), or in that the projections (7, 7') are substantially cuboidal.

2. Pneumatic vehicle tyre according to Claim 1, **characterized in that** the projections (7, 7') have, at the block flank (5a) to which they are attached, a width (b₁) which amounts to 90% to 120% of the width of the opening-in channel (4) at the opening-in point at the tread periphery.

3. Pneumatic vehicle tyre according to Claim 1 or 2, **characterized in that** the projections (7, 7') have, at their thickest point in relation to the level of the block flank (5a), a thickness (d₁) of 40% to 100%, in particular of at least 50%, of the width (B₁'), determined at the tread periphery, of the channel (3) in which the projections (7, 7') are formed.

4. Pneumatic vehicle tyre according to any of Claims 1 to 3, **characterized in that** the channel (3) in which the projections (7, 7') are formed has, at the channel base (6), a width (B₁') of 3.0 mm to 6.0 mm, in particular of at most 4.0 mm, and is preferably a circumferential channel (3).

5. Pneumatic vehicle tyre according to Claim 1, **characterized in that** the height (h₁) of the projections (7, 7') at their highest point amounts to at least 5.0 mm.

6. Pneumatic vehicle tyre according to Claim 1 or 5, **characterized in that** the height (h₁) of the projections (7, 7') amounts to 20% to 60%, in particular at least 50%, of the profile depth (T₁).

7. Pneumatic vehicle tyre according to any of Claims 1 to 6, **characterized in that** the width of the projections (7, 7') decreases in the direction of the opening-in channels (4) of the T-shaped intersections, in particular to the width (B₂') of the opening-in channels (4) at the channel base (6).

8. Pneumatic vehicle tyre according to any of Claims 1 to 7, **characterized in that** the top surface (7a) of the projections (7, 7') is inclined at an angle (β) of 45° to 90°, in particular of at most 60°, with respect to the radial direction.

9. Pneumatic vehicle tyre according to Claim 8, **characterized in that** the top surface (7a) of the projections (7, 7') is inclined such that the height (h₁) of the projections (7, 7') is at its greatest at the block flank (5a).

10. Pneumatic vehicle tyre according to any of Claims 1 to 9, **characterized in that** the projections (7, 7') are delimited in the direction of the opening-in channels (4) of the T-shaped intersections in each case by a flank surface (7c) which is inclined at an angle (α) of 15° to 30° with respect to the radial direction.

11. Pneumatic vehicle tyre according to any of Claims 1 to 10, **characterized in that**, on the channel base (6') of opening-in channels (4), there are formed base elevations (8, 8') which are attached to the block flanks (5'a) and which adjoin the projections (7) and which have a height (h₂) in a radial direction of 5% to 10% of the depth (T₁) of the opening-in channels (4) and which extend over 10% to 100% of the extent length of the opening-in channels (4).

12. Pneumatic vehicle tyre according to any of Claims 1 to 11, **characterized in that**, on the channel base (6') of opening-in channels (4), there are formed base elevations (9) which are attached to the block flanks (5'a) and which do not directly adjoin the projections (7, 7') and which reduce the depth of the opening-in channel (4), over at least 50% of its extent length, to 60% to 80%.

13. Pneumatic vehicle tyre according to any of Claims 1 to 12, **characterized in that** the channels (3, 4) forming T-shaped intersections run at an angle of 90°, or at an angle which deviates from 90° by up to 30°, in particular by up to 20°, with respect to one another with regard to their centrelines, which in plan view are oriented in an extent direction.

## Revendications

1. Pneumatique de véhicule comprenant une bande de roulement pourvue de rangées de blocs profilés (1, 2) comprenant des blocs profilés (5) délimités par des rainures (3, 4), lesquelles rainures (3, 4) forment en vue de dessus des intersections en T et sont délimitées par un fond de rainure (6, 6') et des flancs de bloc (5a, 5'a), des saillies (7, 7') étant formées dans les rainures (3) et ayant, dans la direction radiale à leur point le plus élevé par rapport au point le plus bas des rainures (3), une hauteur (h₁, h₁') de 10 % à 80 % de la profondeur de profilé, étant positionnées dans des zones des intersections en T des rainures (3, 4) et étant reliées au flanc de bloc (5a) opposé à la confluence de la rainure confluente (4),
**caractérisé en ce que**
les saillies (7, 7') sont délimitées dans la direction radiale par une surface supérieure (7a) trapézoïdale en vue de dessus, la base du trapèze étant située sur le flanc de bloc (5a), ou **en ce que** les saillies (7, 7') sont sensiblement parallélépipédiques.

2. Pneumatique de véhicule selon la revendication 1, **caractérisé en ce que** les saillies (7, 7') ont au niveau du flanc de bloc (5a), auquel elles sont reliées, une largeur (b₁) qui est de 90 % à 120 % égale à la largeur de la rainure confluente (4) au niveau de la confluence à la périphérie de la bande de roulement.

3. Pneumatique de véhicule selon la revendication 1 ou 2, **caractérisé en ce que**, par rapport au niveau du flanc de bloc (5a), à son point le plus épais, les saillies (7, 7') ont une épaisseur (d₁) de 40 % à 100 %, notamment d'au moins 50 %, égale à la largeur (B₁'), déterminée à la périphérie de la bande de roulement, de la rainure (3) dans laquelle les saillies (7, 7') sont formées.

4. Pneumatique de véhicule selon l'une des revendications 1 à 3, **caractérisé en ce que** la rainure (3), dans laquelle les saillies (7, 7') sont formées, a une largeur (B₁') de 3,0 mm à 6,0 mm, en particulier d'au plus 4,0 mm, au fond de rainure (6) et est de préférence une rainure circonférentielle (3).

5. Pneumatique de véhicule selon la revendication 1, **caractérisé en ce que** la hauteur (h₁) des saillies (7, 7') est d'au moins 5,0 mm à leur point le plus élevé.

6. Pneumatique de véhicule selon la revendication 1 ou 5, **caractérisé en ce que** la hauteur (h₁) des saillies (7, 7') est de 20 % à 60 %, en particulier d'au moins 50 %, égale à la profondeur de bande de roulement (T₁).

7. Pneumatique de véhicule selon l'une des revendications 1 à 6, **caractérisé en ce que** la largeur des saillies (7, 7') diminue en direction des rainures confluentes (4) des intersections en T, en particulier à la largeur (B₂') des rainures confluentes (4) au fond de rainure (6).

8. Pneumatique de véhicule selon l'une des revendications 1 à 7, **caractérisé en ce que** la surface supérieure (7a) des saillies (7, 7') est inclinée par rapport à la direction radiale d'un angle (β) de 45 ° à 90°, en particulier d'au plus 60°.

9. Pneumatique de véhicule selon la revendication 8, **caractérisé en ce que** la surface supérieure (7a) des saillies (7, 7') est inclinée de telle sorte que la hauteur (h₁) des saillies (7, 7') est la plus grande au niveau du flanc de bloc (5a).

10. Pneumatique de véhicule selon l'une des revendications 1 à 9, **caractérisé en ce que** les saillies (7, 7') sont délimitées chacune, en direction des rainures confluentes (4) des intersections en T, par une surface de flanc (7c) qui est inclinée d'un angle (α) de 15° à 30° par rapport à la direction radiale.

11. Pneumatique de véhicule selon l'une des revendications 1 à 10, **caractérisé en ce que** des élévations de fond (8, 8'), qui sont reliées par des rainures confluentes (4) aux flancs de bloc (5'a), sont formées au niveau du fond de rainure (6'), lesquelles élévations sont reliées aux saillies (7), ont une hauteur (h₂) de 5 % à 10 % égale à la profondeur (T₁) des rainures confluentes (4) dans la direction radiale et s'étendent sur 10 % à 100 % de la longueur d'extension des rainures confluentes (4).

12. Pneumatique de véhicule selon l'une des revendications 1 à 11, **caractérisé en ce que** des élévations de fond (9), qui sont reliées par des rainures confluentes (4) aux flancs de bloc (5'a), sont formées au niveau du fond de rainure (6'), lesquelles élévations ne sont pas directement reliées aux saillies (7, 7') et réduisent la profondeur de la rainure confluente (4) à une valeur de 60 % à 80 % sur au moins 50 % de sa longueur d'extension.

13. Pneumatique de véhicule selon l'une des revendications 1 à 12, **caractérisé en ce que** des rainures (3, 4) formant les intersections en T s'étendent avec un angle de 90° ou un angle qui diffère de 90° jusqu'à 30°, en particulier jusqu'à 20°, par rapport à leurs lignes médianes orientées dans la direction d'extension en vue de dessus.
